# FASCICULE DE BREVET EUROPEEN

(11) **EP 3 071 959 B1**
(45) Date de publication et mention de la délivrance du brevet: **09.09.2020**
(21) Numéro de dépôt: 14809496.4
(22) Date de dépôt: 19.11.2014
(51) Int. Cl.: G01N 27/30

(54) **SYSTEME ELECTROCHIMIQUE COMPRENANT UNE ELECTRODE DE COMPARAISON ET PROCEDE DE FABRICATION CORRESPONDANT**
ELEKTROCHEMISCHES SYSTEM MIT EINER VERGLEICHSELEKTRODE UND ZUGEHÖRIGES HERSTELLUNGSVERFAHREN
ELECTROCHEMICAL SYSTEM COMPRISING A COMPARISON ELECTRODE AND CORRESPONDING MANUFACTURE METHOD

(30) Priorité: 21.11.2013 FR 1361464
(43) Date de publication de la demande: 28.09.2016
(73) Titulaire: Renault S.A.S., 92100 Boulogne-Billancourt (FR)
(72) Inventeur: GENIES, Sylvie, F-38120 Saint Egreve (FR); ALIAS, Mélanie, F-77167 Poligny (FR); LEIRENS, Sylvain, F-38000 Grenoble (FR)
(86) Numéro de dépôt international: PCT/FR2014/052960
(87) Numéro de publication internationale: WO 2015/075375

(56) Documents cités:
- US-A- 3 887 396
- US-A- 4 764 257
- US-A- 5 492 610
- US-A- 5 766 433
- MICKAËL DOLLÉ ET AL: "Development of Reliable Three-Electrode Impedance Measurements in Plastic Li-Ion Batteries", JOURNAL OF THE ELECTROCHEMICAL SOCIETY, vol. 148, no. 8, 1 janvier 2001 (2001-01-01), page A851, XP055128136, ISSN: 0013-4651, DOI: 10.1149/1.1381071

## Description

L'invention a pour domaine technique l'électrochimie, et plus particulièrement le domaine des capteurs électrochimiques de mesure de type électrodes de comparaison.

Une électrode de comparaison est utilisée en tant que troisième électrode dans une cellule électrochimique comprenant une électrode de travail (électrode positive dans un accumulateur) et une contre-électrode (électrode négative dans un accumulateur). Elle permet de caractériser électriquement les deux autres électrodes.

On qualifie en général l'électrode de comparaison (EDC) d'électrode de référence (EDR), lorsque la concentration des espèces oxydantes et réductrices dont dépend la valeur du potentiel est invariante dans le temps. Sinon, on conserve plus généralement le terme d'électrode de comparaison.

En effet, une électrode de comparaison (EDC) peut être employée même si la concentration des espèces oxydantes et réductrices dont dépend la valeur du potentiel peut évoluer dans le temps. Cette évolution doit cependant être très lente pendant le temps de la mesure ou de l'utilisation et ainsi pouvoir être considérée comme négligeable ; c'est à cette condition que le potentiel peut être considéré comme stable.

L'intégration d'une EDR ou d'une EDC au sein d'un système électrochimique est connue pour permettre de caractériser le fonctionnement de l'électrode de travail et de la contre-électrode indépendamment. Son intérêt est double pour la compréhension des phénomènes qui ont lieu au niveau des électrodes du système électrochimique et pour le développement des applications en découlant, telles que le stockage de l'énergie, le développement de capteurs, et la corrosion.

De l'état de la technique, on connaît les documents suivants :
Le document US5492610 divulgue une cellule électrolytique à l'état solide comprenant un électrolyte solide comprenant du Lithium, dans une disposition à trois électrodes comprenant une électrode de travail, une électrode de référence et une contre-électrode.

Le document US 2009/0104510 divulgue l'utilisation d'une EDC pour la mesure des états de charge et de vieillissement des accumulateurs lithium-ion. Le type d'EDC proposé comprend un matériau de type biphasique afin de disposer d'un plateau de tension stable quel que soit l'état de lithiation du couple électrochimique considéré. Le couple mis en avant dans ce brevet est Li₄Ti₅O₁₂/Li₇Ti₅O₁₂ (acronyme LTO). Une liste non exhaustive comprend d'autres couples, en particulier, les alliages lithiés et les phosphates de lithium. Cependant, les électrodes à base de matériau enduit, tel qu'une encre de LTO et LFP (lithium ferrophosphate : FePO₄/LiFePO₄) subissent des dégradations au cours du temps et cela de façon accélérée avec la température. Ceci amène à une dérive du potentiel au-delà de la valeur de plateau plus au moins rapide.

L'article "Will advanced lithium-alloy anodes have a chance in lithium-ion batteries", (J.O. Besenhard, J. Yang, M. Winter, J. Power Sources 68 (1997) 87-90.) divulgue que les alliages de lithium sont des candidats intéressants en raison de leur large plateau de potentiel.

La comparaison d'une EDR de type LTO et d'une électrode de type LiₓA1 montre que les alliages offrent une très bonne stabilité dans le temps de la mesure de tension.

Néanmoins, il apparaît que lorsque le lithium est réduit sur une zone délimitée par l'immersion dans la solution électrolytique de la cellule électrochimique, il diffuse ensuite sur tout le corps du métal constituant l'EDR. Le volume à lithier n'est donc pas maîtrisé et le taux de lithiation difficilement contrôlable. La diffusion lente du lithium dans le matériau peut induire une dérive lente du potentiel de l'EDC.

Il existe donc un problème de stabilité dans le temps du potentiel de référence d'une cellule électrochimique comprenant une électrode de comparaison, notamment une électrode à base d'alliage de lithium.

Un objet de l'invention est un système électrochimique défini par la revendication 1.

Par matériau inerte chimiquement vis-à-vis de l'élément chimique A et de sa forme ionique A^{z+}, on entend un matériau ne réagissant pas chimiquement avec l'élément chimique et sa forme ionique dans les conditions de fonctionnement du système électrochimique (température, potentiel,...). Le matériau de la deuxième partie est également inerte vis-à-vis de l'électrolyte en général.

L'électrolyte peut être liquide ou solide.

Avantageusement, la totalité de la surface de la première partie peut être en contact avec l'électrolyte. Dans le cas d'un électrolyte liquide, la première partie peut être totalement immergée dans l'électrolyte liquide.

Par contre, la deuxième partie peut comprendre avantageusement une partie qui n'est pas en contact avec l'électrolyte afin de permettre la prise de contact.

L'élément chimique peut être du lithium et le métal M peut être choisi parmi l'aluminium, le bismuth, l'antimoine, l'indium et l'étain. Les métaux M sont des métaux aptes à s'allier avec le lithium pour former un alliage LiₓM avec un taux de lithium x inférieur à 1.

L'élément chimique A peut être du sodium et le métal M peut être choisi parmi l'étain, les alliages d'étain et d'antimoine, le plomb, le germanium, et le silicium. Ces métaux M sont des métaux capables de s'allier avec le sodium pour former un alliage NaxM avec un taux de sodium égal à x.

Le matériau conducteur électriquement de la deuxième partie est un matériau céramique choisi parmi ReO₂, ReO₃, Cr₂O₃, VO et TiO.

Un autre objet de l'invention est un procédé de fabrication d'un système électrochimique défini par la revendication 5.

L'élément chimique peut être du lithium et le métal peut être choisi parmi l'aluminium, le bismuth, l'antimoine, l'indium et l'étain.

L'élément chimique peut être du sodium et le métal peut être choisi parmi l'étain, les alliages d'étain et d'antimoine, le plomb, le germanium, et le silicium.

Le matériau conducteur électriquement de la deuxième partie est un matériau céramique choisi parmi ReO₂, ReO₃, Cr₂O₃, VO et TiO.

On peut assembler l'électrode de comparaison dans le système électrochimique, puis on dope la première partie en appliquant un courant entre l'électrode de travail, la contre électrode et l'électrode de comparaison immergées toutes trois au moins en partie dans l'électrolyte.

On peut mettre en contact direct la première partie avec la deuxième partie par une méthode métallurgique, par une méthode chimique, par une méthode physique ou électrochimique.

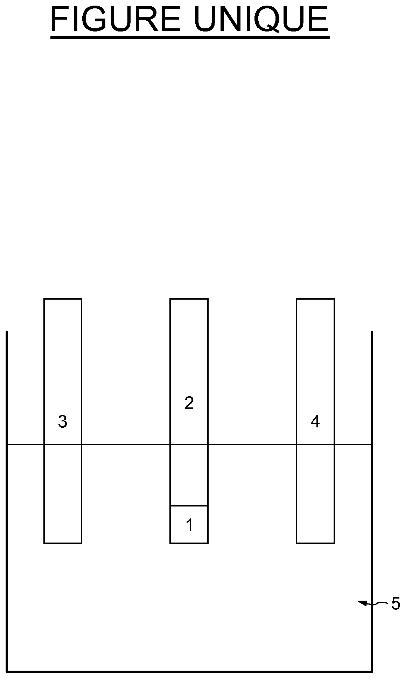

D'autres buts, caractéristiques et avantages apparaîtront à la lecture de la description suivante donnée uniquement en tant qu'exemple non limitatif et faite en référence à la figure unique annexée qui illustre un système électrochimique comprenant une électrode de comparaison selon l'invention.

La description suivante fait référence à la technologie lithium-ion. L'homme du métier pourra aisément étendre cet enseignement à d'autres technologies de batteries telles que celle des batteries Sodium-Ion, ou à d'autres domaines d'application tels que ceux des capteurs électrochimiques.

Pour obtenir une électrode de comparaison fonctionnelle dans un système lithium-ion, plusieurs méthodes d'activation, également nommées « fonctionnalisation » peuvent être employées afin de définir de façon précise la stoechiométrie du couple d'oxydo-réduction considéré. Il est ainsi possible d'ajuster le potentiel de l'électrode en modifiant le taux de lithium dans la phase lithiée. Cette étape peut être effectuée ex-situ, avant l'intégration de l'EDR dans le système. Elle peut également être réalisée in-situ en utilisant l'électrode de travail ou la contre électrode comme source de lithium pour la lithiation. Ce dernier cas est décrit ci-dessous :
La fonctionnalisation in-situ d'une électrode de comparaison peut être réalisée par différentes méthodes électrochimiques telles que, notamment, la chronoampérométrie, la chronopotentiométrie, ou la voltammétrie cyclique. La lithiation se fait alors habituellement dans tout le volume de l'EDR immergé dans l'électrolyte.

Cependant après cette étape, des phénomènes de diffusion lente du lithium au sein du métal conduisent à une homogénéisation de la concentration en lithium dans tout le volume de l'EDR, y compris dans la partie non immergée de l'électrode, c'est-à-dire en dehors du milieu actif électrochimiquement (électrode négative/électrolyte/électrode positive) à proprement parler. L'alliage est ensuite altéré au contact de l'air, en particulier par interaction avec l'humidité de l'air et/ou de l'oxygène.

La consommation du lithium par réaction secondaire avec des espèces oxydantes (H₂O, O₂,...) conduit à une diminution de la concentration de lithium dans l'alliage vers des taux faibles (x < 0,1 dans LiₓAl). Suivant le taux x atteint, le potentiel de l'électrode peut dériver hors du plateau de potentiel.

Afin d'éviter de telles dérives, il est nécessaire de maitriser la stoechiométrie du couple métal/métal lithié pour préserver la structure mécanique de l'électrode, tout en disposant d'éléments permettant d'éviter la diffusion du lithium sur tout le corps de cette électrode.

Pour cela, l'électrode de comparaison comprend une première partie 1 correspondant à la zone active habituelle de l'électrode. L'électrode de comparaison comprend en outre une deuxième partie 2 distincte, mise en contact direct avec la première partie 1 afin de maintenir le lithium dans la première partie 1 et en éviter la diffusion à travers la partie de l'électrode qui n'est pas en contact avec l'électrolyte. Ainsi, la première partie 1 correspond à la zone immergée dans l'électrolyte 5 lorsque celui-ci est liquide, tandis que la deuxième partie 2 comprend un matériau inactif chimiquement vis-à-vis du lithium, l'ion Li⁺ et plus particulièrement avec l'électrolyte. L'ensemble est illustré par la figure unique. Le système électrochimique illustré comprend également une électrode de travail 3 et une contre électrode 4. La deuxième partie 2 doit être stable dans le domaine électrochimique de fonctionnement de la cellule vis-à-vis de l'électrolyte. Une telle structure permet d'empêcher la migration du lithium après la lithiation de la première partie 1.

Selon l'invention, il est proposé d' employer un matériau céramique présentant une conduction électrique suffisante. De telles céramiques sont choisies parmi ReO₂, ReO₃, Cr₂O₃, VO, TiO (Techniques de l'Ingénieur, F.J.-.M.Haussonne, E 1 820-1 à 11), qui présentent une bande électronique de conduction similaire à celle des métaux.

La structure de l'électrode de comparaison peut être très variable en fonction du format du système électrochimique lithium-ion à instrumenter. Le système peut comprendre un empilement ou un enroulement d'électrodes. Par ailleurs, l'électrode de comparaison peut se présenter sous forme de fil, de grille ou de plaque. Elle peut être positionnée sur la tranche du système électrochimique (bobiné ou empilé), ou entre des bandes d'électrodes, l'EDR étant elle-même isolée électriquement par un film séparateur. Enfin, elle est intégrée dans le séparateur. On rappelle qu'un séparateur permet de séparer physiquement une électrode de travail d'une contre électrode disposées à proximité l'une de l'autre.

La mise en contact des première et deuxième parties peut être réalisée par une méthode métallurgique (soudure), par une méthode chimique (dépôt chimique en phase vapeur, acronyme anglais CVD pour « Chemical Vapor Déposition »), physique (dépôt physique en phase vapeur, acronyme anglais PVD pour « Physical Vapor Déposition ») ou électrochimique (électrodépôt) en déposant la première partie 1 sur la deuxième partie 2. Par rapport à la méthode métallurgique, les méthodes chimique, physique et électrochimique permettent de réduire la résistance de contact, et donc la résistance électrique, entre les deux parties.

L'électrode de comparaison comprend par exemple une première partie 1 en alliage lithium-aluminium LiₓAl. Le taux x est alors choisi inférieur à 1 pour se situer dans le plateau du domaine de potentiel décrit dans la littérature. Un taux supérieur engendrerait une perte de tenue mécanique résultant d'une expansion volumique importante.

Cette fonctionnalisation doit se faire en outre en une seule étape de lithiation. Une fonctionnalisation en plusieurs étapes impliquerait l'application de plusieurs cycles de charge-décharge qui peuvent induire une expansion volumique importante.

Dans le domaine des batteries lithium-ion, l'électrode de comparaison en alliage est plus stable dans le temps et en température qu'une électrode composite (réalisée par une encre). Elle peut être exploitée comme indicateur fiable de l'état de vieillissement de batteries lithium-ion.

Selon un mode de réalisation, l'électrode de comparaison comprend un empilement de deux couches superposées. La première couche peut être réalisée en matériau céramique. Cette première couche correspond à la deuxième partie, référencée 2 plus haut. On dépose ensuite sur cette première couche, une deuxième couche correspondant à la première partie, référencée 1 plus haut. Cette deuxième couche est déposée, par exemple par CVD sous la forme d'une couche de plus faible épaisseur que la première couche. La deuxième couche peut être réalisée par exemple en métal apte à s'allier avec le lithium Li.

## Revendications

1. Système électrochimique comprenant un électrolyte (5) comprenant au moins une forme ionique d'un élément chimique A choisi parmi le lithium et le sodium, en contact avec une électrode de comparaison (1,2), une électrode de travail (3) et une contre-électrode (4), l'électrode de comparaison (1,2) comprenant
une première partie (1) en contact avec l'électrolyte (5) et comprenant un métal M apte à s'allier avec ledit élément chimique, ou un alliage métallique dudit métal M et dudit élément chimique A, et
une deuxième partie (2) constituée par un matériau conducteur électriquement, inerte chimiquement vis-à-vis de l'élément chimique A et de sa forme ionique et en contact direct avec la première partie (1) de l'électrode de comparaison, **caractérisée par le fait que**
le matériau conducteur électriquement de la deuxième partie (2) est un matériau céramique choisi parmi ReO₂, ReO₃, Cr₂O₃, VO et TiO.

2. Système selon la revendication précédente, dans lequel l'élément chimique A est du lithium et le métal M est choisi parmi l'aluminium, le bismuth, l'antimoine, l'indium et l'étain.

3. Système selon la revendication précédente **caractérisé en ce que** la première partie (1) est constituée par de l'aluminium ou par l'alliage LiₓA1 avec un taux de lithium inférieur à 1, l'électrolyte (5) comprenant des ions lithium.

4. Système selon la revendication 1 dans lequel l'élément chimique A est du sodium et le métal M est choisi parmi l'étain, les alliages d'étain et d'antimoine, le plomb, le germanium, et le silicium.

5. Procédé de fabrication d'un système électrochimique comprenant un électrolyte (5) contenant au moins une forme ionique d'un élément chimique A, en contact avec une électrode de comparaison (1,2), une électrode de travail (3) et une contre électrode (4), le procédé comprenant les étapes suivantes :
on assemble l'électrode de comparaison (1,2) comprenant une première partie (1) en contact direct avec la deuxième partie (2), la première partie (1) en contact avec l'électrolyte (5) et comprenant un métal M apte à s'allier avec ledit élément chimique, ou un alliage métallique dudit métal M et dudit élément chimique A, la deuxième partie (2) étant constituée par un matériau conducteur électriquement, inerte chimiquement vis-à-vis de l'élément chimique A et de sa forme ionique, et
on dope la première partie (1) avec la forme ionique de l'élément chimique A de l'électrolyte (5),
le procédé étant **caractérisé par le fait que** le matériau conducteur électriquement de la deuxième partie (2) est un matériau céramique choisi parmi ReO₂, ReO₃, Cr₂O₃, VO et TiO.

6. Procédé selon la revendication 5, dans lequel l'élément chimique A est du lithium et le métal M est choisi parmi l'aluminium, le bismuth, l'antimoine, l'indium et l'étain.

7. Procédé selon la revendication 5, dans lequel l'élément chimique A est du sodium et le métal M est choisi parmi l'étain, les alliages d'étain et d'antimoine, le plomb, le germanium, et le silicium.

8. Procédé selon l'une des revendications 5 à 7 dans lequel on assemble l'électrode de comparaison (1,2) dans le système électrochimique, puis on dope la première partie (1) en appliquant un courant entre l'électrode de travail (3), la contre-électrode (4) et l'électrode de comparaison (1,2) immergées toutes trois dans l'électrolyte (5).

9. Procédé selon l'une des revendications 5 à 8 dans lequel on met en contact direct la première partie (1) avec la deuxième partie (2) par une méthode métallurgique, par une méthode chimique, par une méthode physique ou électrochimique.

## Patentansprüche

1. Elektrochemisches System mit einem Elektrolyten (5), der mindestens eine Ionenform eines chemischen Elements A umfasst, das aus Lithium und Natrium ausgewählt ist, im Kontakt mit einer Vergleichselektrode (1, 2), einer Arbeitselektrode (3) und einer Gegenelektrode (4), wobei die Vergleichselektrode (1, 2) umfasst:
einen ersten Abschnitt (1) im Kontakt mit dem Elektrolyten (5), der ein Metall M, das in der Lage ist, mit dem chemischen Element eine Legierung zu bilden, oder eine Metalllegierung aus dem Metall M und dem chemischen Element A umfasst, und
einen zweiten Abschnitt (2), der von einem elektrisch leitfähigen Material gebildet ist, das chemisch inert gegenüber dem chemischen Element A und dessen Ionenform ist, und im direkten Kontakt zu dem ersten Abschnitt (1) der Vergleichselektrode, **dadurch gekennzeichnet, dass**
das elektrisch leitfähige Material des zweiten Abschnitts (2) ein keramisches Material ist, das aus ReO₂, ReO₃ Cr₂O₃, VO und TiO ausgewählt ist.

2. System nach dem vorhergehenden Anspruch, wobei das chemische Element A Lithium ist und das Metall M ausgewählt ist aus Aluminium, Bismut, Antimon, Indium und Zinn.

3. System nach dem vorhergehenden Anspruch, **dadurch gekennzeichnet, dass** der erste Abschnitt (1) aus Aluminium oder aus der Legierung LiₓAl mit einem Anteil von Lithium von unter 1 besteht, wobei der Elektrolyt (5) Lithiumionen umfasst.

4. System nach Anspruch 1, wobei das chemische Element A Natrium ist und das Metall M ausgewählt ist aus Zinn, Zinn- und Antimonlegierungen, Blei, Germanium und Silicium.

5. Verfahren zur Herstellung eines elektrochemischen Systems mit einem Elektrolyten (5), der mindestens eine Ionenform eines chemischen Elements A enthält, im Kontakt mit einer Vergleichselektrode (1, 2), einer Arbeitselektrode (3) und einer Gegenelektrode (4), wobei das Verfahren folgende Schritte umfasst:
Zusammensetzen der Vergleichselektrode (1, 2), die einen ersten Abschnitt (1) im direkten Kontakt mit dem zweiten Abschnitt (2) umfasst, wobei der erste Abschnitt (1) mit dem Elektrolyten (5) in Kontakt ist und ein Metall M, das in der Lage ist, mit dem chemischen Element eine Legierung zu bilden, oder eine Metalllegierung aus dem Metall M und dem chemischen Element A umfasst, wobei der zweite Abschnitt (2) von einem elektrisch leitfähigen Material gebildet ist, das chemisch inert gegenüber dem chemischen Element A und dessen Ionenform ist, und
Dotieren des ersten Abschnitts (1) mit der Ionenform des chemischen Elements A des Elektrolyten (5),
wobei das Verfahren **dadurch gekennzeichnet ist, dass** das elektrisch leitfähige Material des zweiten Abschnitts (2) ein keramisches Material ist, das aus ReO₂, ReO₃, Cr₂O₃, VO und TiO ausgewählt ist.

6. Verfahren nach Anspruch 5, wobei das chemische Element A Lithium ist und das Metall M ausgewählt ist aus Aluminium, Bismut, Antimon, Indium und Zinn.

7. Verfahren nach Anspruch 5, wobei das chemische Element A Natrium ist und das Metall M ausgewählt ist aus Zinn, Zinn- und Antimonlegierungen, Blei, Germanium und Silicium.

8. Verfahren nach einem der Ansprüche 5 bis 7, wobei die Vergleichselektrode (1, 2) in dem elektrochemischen System zusammengesetzt und anschließend der erste Abschnitt (1) durch Anlegen eines Stroms zwischen der Arbeitselektrode (3), der Gegenelektrode (4) und der Vergleichselektrode (1, 2) dotiert wird, die alle drei in dem Elektrolyten (5) eingetaucht sind.

9. Verfahren nach einem der Ansprüche 5 bis 8, wobei der erste Abschnitt (1) über ein metallurgisches Verfahren, ein chemisches Verfahren, ein physikalisches oder ein elektrochemisches Verfahren mit dem zweiten Abschnitt (2) in Kontakt gebracht wird.

## Claims

1. Electrochemical system comprising an electrolyte (5) comprising at least one ionic form of a chemical element A chosen from lithium and sodium, in contact with a comparison electrode (1, 2), a working electrode (3) and a counterelectrode (4), the comparison electrode (1, 2) comprising
a first part (1) in contact with the electrolyte (5) and comprising a metal M capable of alloying with said chemical element, or a metal alloy of said metal M and of said chemical element A, and
a second part (2) consisting of an electrically conducting material, chemically inert with respect to the chemical element A and its ionic form and in direct contact with the first part (1) of the comparison electrode,
**characterized in that** the electrically conducting material of the second part (2) is a ceramic material chosen from ReO₂, ReO₃, Cr₂O₃, VO and TiO.

2. System according to the preceding claim, wherein the chemical element A is lithium and the metal M is chosen from aluminium, bismuth, antimony, indium and tin.

3. System according to the preceding claim, **characterized in that** the first part (1) consists of aluminium or of the alloy LiₓAl with a lithium content of less than 1, the electrolyte (5) comprising lithium ions.

4. System according to Claim 1, wherein the chemical element A is sodium and the metal M is chosen from tin, alloys of tin and of antimony, lead, germanium and silicon.

5. Process for the manufacture of an electrochemical system comprising an electrolyte (5) containing at least one ionic form of a chemical element A, in contact with a comparison electrode (1,2), a working electrode (3) and a counterelectrode (4), the process comprising the following stages:
the assembling is carried out of the comparison electrode (1, 2) comprising a first part (1) in direct contact with the second part (2), the first part (1) in contact with the electrolyte (5) and comprising a metal M capable of alloying with said chemical element, or a metal alloy of said metal M and of said chemical element A, the second part (2) consisting of an electrically conducting material, chemically inert with respect to the chemical element A and its ionic form, and
the first part (1) is doped with the ionic form of the chemical element A of the electrolyte (5),
the process being **characterized in that** the electrically conducting material of the second part (2) is a ceramic material chosen from ReO₂, ReO₃, Cr₂O₃, VO and TiO.

6. Process according to Claim 5, wherein the chemical element A is lithium and the metal M is chosen from aluminium, bismuth, antimony, indium and tin.

7. Process according to Claim 5, wherein the chemical element A is sodium and the metal M is chosen from tin, alloys of tin and of antimony, lead, germanium and silicon.

8. Process according to one of Claims 5 to 7, wherein the comparison electrode (1, 2) is assembled in the electrochemical system and then the first part (1) is doped by applying a current between the working electrode (3), the counterelectrode (4) and the comparison electrode (1, 2), all three immersed in the electrolyte (5).

9. Process according to one of Claims 5 to 8, wherein the first part (1) is brought into direct contact with the second part (2) by a metallurgical method, by a chemical method, by a physical method or by an electrochemical method.
